# EUROPÄISCHE PATENTANMELDUNG

(11) **EP 4 306 911 A1**
(43) Veröffentlichungstag der Anmeldung: **17.01.2024**
(21) Anmeldenummer: 23184740.1
(22) Anmeldetag: 11.07.2023
(51) Int. Cl.: G01D 5/20

(54) **INDUKTIVER SENSOR ZUR ERFASSUNG EINER POSITION**

(30) Priorität: 15.07.2022 DE 102022117762
(71) Anmelder: Bourns, Inc., Riverside, CA 92507 (US)
(72) Erfinder: Berner, Sebastian, 81371 Alramstraße 11 München (DE); Prölß, Christian, 81245 Erna-Eckstein-Straße 3 München (DE); Wischke, Martin, 83607 Siedlerstraße 1h Hozkirchen (DE); Coskuner, Hasan, 83026 Leitzachstraße 28 Rosenheim (DE)
(74) Vertreter: von Bülow & Tamada

(57) **Zusammenfassung**

Die Erfindung betrifft einen induktiven Sensor (9) zur Erfassung einer Position, umfassend:
- eine Oszillatorschaltung, die ein periodisches Wechselspannungssignal erzeugt und in eine Erregerspule (23) einkoppelt,
- ein Empfangsspulenpaar (31) mit einer ersten Empfangsspule (25) und einer zweiten Empfangsspule (30), die jeweils eine sich periodisch wiederholende Schleifenstruktur ausbilden und deren Anordnung insgesamt eine Empfangsgeometrie ausbildet, wobei die Erregerspule (23) eingerichtet ist, basierend auf dem eingekoppelten Wechselspannungssignal in jeder Empfangsspule (25, 30) ein Signal zu induzieren,
- eine Auswerteschaltung (21) zur Ausgabe eines von der zu erfassenden Position abhängigen Sensorsignals (19) basierend auf den in den Empfangsspulen (25, 30) induzierten Signalen und
- ein bewegliches Koppelelement (16), welches die Stärke der induktiven Kopplungen zwischen der Erregerspule (23) und den Empfangsspulen (25, 30) in Abhängigkeit der zu erfassenden Position beeinflusst,
**dadurch gekennzeichnet, dass**
- die Empfangsspulen (25, 30) des Empfangsspulenpaar (31) voneinander mit einem Zwischenraum (32) geometrisch beabstandet angeordnet und miteinander elektrisch verbunden (26) sind.

## Beschreibung

Die vorliegende Erfindung betrifft einen induktiven Sensor gemäß dem Oberbegriff des geltenden Anspruchs 1.

Ein induktiver Sensor gemäß dem Oberbegriff des Anspruchs 1 ist aus der Veröffentlichung "High speed inductive position sensor for E-machines, L. Lugani et al, Melexis, 2021", herunterladbar unter https://media.melexis.com/-/media/files/documents/whitepapers/ inductive-resolver-e-motors-whitepaper-melexis.pdf bekannt.

Die Veröffentlichung schlägt zur Senkung der Fehleranfälligkeit des induktiven Sensors einerseits die Verwendung von mehr als zwei parallel verschalteten Empfangsspulen vor und im Falle eines induktiven Sensors in Form eines Winkelsensors die Empfangsspulen O-förmig (um die Rotationsachse geschlossen) auszubilden. Zwar konnte mit C-förmigen Empfangsspulen (also mehr als 180° aber weniger als 360° um die Rotationsachse verlaufend) bereits eine Senkung der Fehleranfälligkeit erreicht werden, diese ist allerdings stets kleiner als bei O-förmigen Empfangsspulen.

Aus der DE4429444A1 ist ein induktiver Sensor zur Erfassung einer Position mit einer Oszillatorschaltung bekannt, die ein periodisches Wechselspannungssignal erzeugt und in eine Erregerspule einkoppelt. Zwei in Reihe geschaltete Empfangsspulen in dem Sensor bilden eine gemeinsame sich periodisch wiederholende Schleifenstruktur und damit eine gemeinsame Empfangsgeometrie. Die Erregerspule induziert basierend auf dem eingekoppelten Wechselspannungssignal in den Empfangsspulen ein gemeinsames Signal, das von einer Auswerteschaltung ausgewertet und in ein von der zu erfassenden Position abhängiges Sensorsignal gewandelt wird. Ein bewegliches Koppelelement beeinflusst dabei die Stärke der induktiven Kopplungen zwischen der Erregerspule und den Empfangsspulen in Abhängigkeit von der zu erfassenden Position.

Aufgabe der Erfindung ist, den induktiven Sensor zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein induktiver Sensor zur Erfassung einer Position eine Oszillatorschaltung, die ein periodisches Wechselspannungssignal erzeugt und in eine Erregerspule einkoppelt, ein insbesondere parallel verschaltetes Empfangsspulenpaar mit einer ersten Empfangsspule und einer zweiten Empfangsspule, die jeweils eine sich periodisch wiederholende Schleifenstruktur ausbilden und deren Anordnung insgesamt eine Empfangsgeometrie ausbildet, wobei die Erregerspule eingerichtet ist, basierend auf dem eingekoppelten Wechselspannungssignal in jeder Empfangsspule ein Signal zu induzieren, eine Auswerteschaltung zur Ausgabe eines von der Position abhängigen Sensorsignals basierend auf den in den Empfangsspulen induzierten Signalen und ein bewegliches Koppelelement, welches die Stärke der induktiven Kopplungen zwischen der Erregerspule und den Empfangsspulen in Abhängigkeit der zu erfassenden Position beeinflusst. Erfindungsgemäß sind die Empfangsspulen des Empfangsspulenpaars voneinander mit einem Zwischenraum geometrisch beabstandet angeordnet und miteinander elektrisch verbunden.

Der Erfindung liegt die Überlegung zugrunde, dass der eingangs genannte induktive Sensor zwar robust gegenüber Fehlpositionierungen seiner Einzelteile gegeneinander ist, allerdings einen sehr hohen Fertigungsaufwand mit sich bringt. Aufgrund der Anzahl der Phasen sind für eine sogenannte twisted pair ähnliche Verdrahtung, bei der ein Wechsel der Leiterplattenebene immer an den Maxima der Schleifenstrukturen der Empfangsspulen erfolgt, für eine O-förmig um die Rotationsachse gelegte Empfangsspule mindestens sechs Leiterplattenebenen notwendig. Die Anzahl der notwendigen Leiterplattenebenen kann im Falle einer C-förmigen Struktur der Empfangsspulen gesenkt werden, allerdings geht das einher mit dem Anstieg der Fehleranfälligkeit, die eingangs erwähnt ist, und einem fertigungstechnisch suboptimalen Aufbau, weil die Empfangsspule stets mit einem Umlaufwinkel von größer als 180° um die Rotationsachse gelegt sein muss.

Die Erfindung geht hier einen anderen Weg. Die miteinander parallel verschalteten und damit elektrisch verbunden Empfangsspulen des Empfangsspulenpaars löschen gegeneinander die in dem eingangs genannten Stand der Technik genannten Fehler aus und senken so die Fehleranfälligkeit des induktiven Sensors. Dabei lässt sich die Anzahl der notwendigen Leiterplattenebenen zur Realisierung der Schleifenstrukturen wirksam senken. Überraschenderweise lässt sich dieses Konzept - anders als die Idee im eingangs genannten Stand der Technik - auch auf einen induktiven Sensor zur Erfassung einer linearen Position anwenden, wenn beispielsweise zwei Empfangsspulen elektrisch miteinander verbunden werden, deren Schleifenstrukturen zueinander parallel verlaufen. Auch diese Empfangsspulen löschen gegenseitig Fehler aus.

Gegenüber dem eingangs genannten induktiven Sensor mit in Reihe geschalteten Empfangsspulen bietet der genannte Sensor eine erhöhte Empfindlichkeit. Wenn Empfangsspulen parallel geschaltet sind, erhöht sich ihre Gesamtfläche, was zu einer höheren Sensitivität des Sensors führt. Dies ist vorteilhaft, wenn das zu detektierende Signal sehr schwach ist. Zudem bieten die parallel geschalteten Empfangsspulen eine verbesserte Störfestigkeit, denn die Parallelschaltung von Spulen trägt dazu bei, den Einfluss von externen elektromagnetischen Störungen zu minimieren. Dies wird erreicht, indem das induzierte Rauschen in den Spulen in entgegengesetzte Richtungen geleitet wird, was dazu führt, dass sie sich gegenseitig aufheben. Schließlich haben die beiden parallel geschalteten Empfangsspulen auch einen geringeren Gesamtwiderstand, denn in einer Parallelschaltung ist der Gesamtwiderstand kleiner als der kleinste Widerstand der einzelnen Spulen. Das bedeutet, dass das Signal durch die Spulen mit weniger Widerstand fließen kann, was zu einer höheren Signalstärke führt.

In einer Weiterbildung des angegebenen induktiven Sensors sind die Schleifenstrukturen der Empfangsspulen bezüglich eines Symmetriezentrums zueinander symmetrisch ausgebildet. Auf diese Weise kann die fehlerauslöschende Wirkung gesteigert werden.

Ist die zu erfassende Position des induktiven Sensors eine Winkelposition um eine Rotationsachse, kann in einer zusätzlichen Weiterbildung des angegebenen Sensors das Symmetriezentrum die Rotationsachse sein, zu der die Schleifenstrukturen punktsymmetrisch ausgebildet sind. Auf diese Weise wird die eingangs genannte Senkung der Fehleranfälligkeit mit fertigungstechnisch deutlich einfacheren Mitteln erreicht.

In einer besonderen Weiterbildung umfasst der angegebene induktive Sensor ein weiteres insbesondere parallel verschaltetes Empfangsspulenpaar mit einer ersten Empfangsspule und einer zweiten Empfangsspule, die jeweils eine sich periodisch wiederholende Schleifenstruktur ausbilden und deren Anordnung insgesamt eine Empfangsgeometrie ausbildet, wobei die Erregerspule eingerichtet ist, basierend auf dem eingekoppelten Wechselspannungssignal in jeder Empfangsspule des weiteren Emfangsspulenpaars ein Signal zu induzieren.

Mit dem zusätzlichen Empfangsspulenpaar lässt sich der Funktionsumfang des angegebenen induktiven Sensors erweitern.

So kann in einer besonderen Weiterbildung des angegebenen induktiven Sensors das *[gleiche]* bewegliche Koppelelement die Stärke der induktiven Kopplungen zwischen der Erregerspule und den Empfangsspulen des weiteren Empfangsspulenpaars in Abhängigkeit der zu erfassenden Position beeinflussen, wobei die Auswerteschaltung zur Ausgabe des von der Position abhängigen Sensorsignals basierend auf einer Gegenüberstellung der in den Empfangsspulen des Empfangsspulenpaars und der in den Empfangsspulen des weiteren Empfangsspulenpaars induzierten Signalen eingerichtet ist. Auf diese Weise lässt sich der angegebene induktive Sensor in einfacher Weise mit Redundanz ausstatten, um die erfasste Position plausibilisieren.

In einer besonderen Weiterbildung des angegebenen induktiven Sensors kann ein weiteres bewegliches Koppelelement, die Stärke der induktiven Kopplungen zwischen der Erregerspule und den Empfangsspulen des weiteren Empfangsspulenpaars in Abhängigkeit der zu erfassenden Position beeinflussen, wobei die Auswerteschaltung zur Ausgabe des von der Position abhängigen Sensorsignals basierend auf den in den Empfangsspulen des Empfangsspulenpaars und den in den Empfangsspulen des weiteren Empfangsspulenpaars induzierten Signalen eingerichtet ist. Auf diese Weise lässt sich eine Differenzposition zwischen den beiden Koppelelementen erfassen, die beispielsweise zur Bestimmung eines Kraft- oder Drehmoments genutzt werden kann.

Die beiden zuvor genannten Konzepte lassen sich selbstverständlich auch kombinieren.

In einer zusätzlichen Weiterbildung des angegebenen induktiven Sensors ist die ersten Empfangsspule des weiteren Empfangsspulenpaars in einer Änderungsrichtung der zu erfassenden Position gesehen im Zwischenraum zwischen den Empfangsspulen des Empfangsspulenpaars angeordnet. Auf diese Weise lässt sich der angegebene induktive Sensor äußerst platzsparend realisieren.

In einer noch weiteren Weiterbildung des angegebenen induktiven Sensors sind die Empfangsspulenpaare auf verschiedenen Seiten einer Leiterplatte getragen, so dass sich die zuvor genannte Differenzposition aufgrund der Verwendung nur einer Leiterplatte auf einem sehr kleinen Bauraum erfassen lässt.

In einer weiteren Weiterbildung umfasst der angegebene induktive Sensor ein im Zwischenraum angeordnetes elektronisches Bauelement, was eine weitere Reduktion des Bauraumbedarfs für den angegebenen induktiven Sensor mit sich bringt.

In einer noch anderen Weiterbildung des angegebenen induktiven Sensors ist das elektronische Bauelement ein elektromagnetisches Abschirmelement, was insbesondere bei der oben genannten Erfassung der Differenzposition einen Crosstalk zwischen den beiden Empfangsspulenpaaren vermeidet.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 schematisch eine perspektivische Ansicht eines Fahrzeuges mit einem Lenksystem,
Fig. 2 eine schematische Ansicht einer Ausführung eines induktiven Sensors zum Erfassen einer Position in einer Anwendung als Drehmomentsensor für das Lenksystem aus Fig. 1,
Fig. 3a eine schematische Ansicht eines Teils des induktiven Sensors der Fig. 2,
Fig. 3b eine schematische Schnittansicht eines Teils einer Weiterbildung des induktiven Sensors der Fig. 2 gemäß einem ersten in der Fig. 3a angezeigten Schnittverlauf,
Fig. 3c eine schematische Schnittansicht eines Teils der Weiterbildung des induktiven Sensors der Fig. 3b gemäß einem zweiten in der Fig. 3a angezeigten Schnittverlauf,
Fig. 4a eine schematische Ansicht des Teils des induktiven Sensors der Fig. 2, wie er in Fig. 3a gezeigt ist,
Fig. 4b eine schematische Ansicht eines Teils eines alternativen induktiven Sensors.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

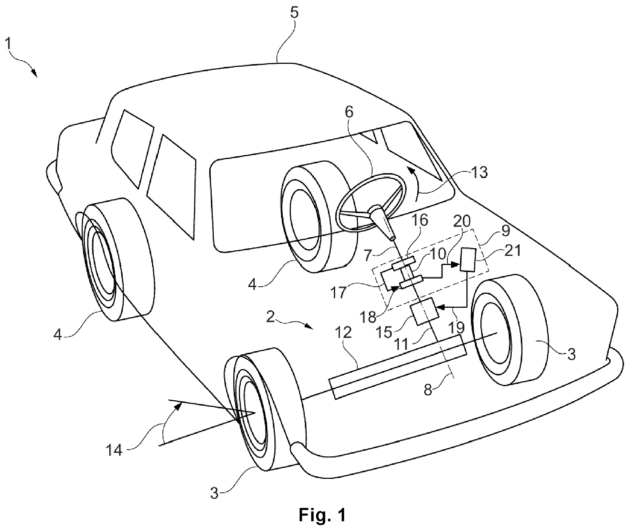

Es wird auf Fig. 1 Bezug genommen, die schematisch eine perspektivische Ansicht eines Fahrzeuges 1 mit einem Lenksystem 2 zeigt.

Das Fahrzeug 1 umfasst im vorliegenden Ausführungsbeispiel ein auf zwei Vorderrädern 3 und auf zwei Hinterrädern 4 getragenes Chassis 5. Die Vorderräder 3 können dabei über das Lenksystem 2 eingeschlagen werden, damit mit dem Fahrzeug 1 eine Kurve gefahren werden kann.

Das Lenksystem 2 umfasst ein Lenkrad 6, das auf eine erste Lenkwelle 7 aufgesetzt ist, die wiederum um eine Rotationsachse 8 drehbar angeordnet ist. Die erste Lenkwelle 7 ist in einen induktiven Sensor 9 zur Erfassung einer Position, hier in Form einer Winkelposition, geführt und dort in nicht weiter spezifizierter Weise mit einem Torsionselement 10 verbunden. An dieses Torsionselement 10 schließt sich auf der der ersten Lenkwelle 7 gegenüberliegenden Seite auf der Rotationsachse 8 eine zweite Lenkwelle 11 an, die wiederum in einem Lenkgetriebe 12 endet. Wird das Lenkrad 6 mit einem Drehmoment in Form eines Lenkmomentes 13 gedreht, wird das Lenkmoment 13 entsprechend über die Lenkwellen 7, 11 an das Lenkgetriebe 12 übertragen, welches als Reaktion darauf die Vorderräder 3 für die Kurvenfahrt mit einem Radeinschlag 14 einschlägt.

Der Lenkvorgang wird mit einem Hilfsmotor 15 unterstützt, der die zweite Lenkwelle 11 hilfsweise mitdreht. Hierzu wird das Lenkmoment 13 aus der relativen Winkelposition zwischen der ersten Lenkwelle 7 zur zweiten Lenkwelle 11 abgeleitet, die mit dem induktiven Sensor 9 erfasst wird. Der Hilfsmotor 15 dreht dann unter anderem in Abhängigkeit des erfassten Lenkmomentes 13 die zweite Lenkwelle 11.

Zur Erfassung der zuvor genannten Winkelposition und damit des Lenkmomentes 13 umfasst der induktive Sensor 9 ein mit der ersten Lenkwelle 7 verbundenes Koppelelement 16, welches ein magnetisches Feld 17 beeinflusst. Der induktive Sensor 9 umfasst ferner eine mit der zweiten Lenkwelle 11 verbundene Messschaltung 18, welche das magnetische Feld 17 erregt und vom Koppelelement 16 in Abhängigkeit einer relativen Winkelposition der ersten Lenkwelle 7 zur zweiten Lenkwelle 11 beeinflusst wieder erfasst. Die Messschaltung 18 generiert ein von dem beeinflussten Magnetfeld 17 abhängiges Messsignal 20 und leitet es an eine Auswerteeinrichtung 21 weiter. Da das Messsignal 20 damit als Information die zu erfassende Winkelposition trägt, bestimmt die Auswerteeinrichtung 21 basierend auf dem Messsignal 20 die relative Winkelposition der beiden Lenkwellen 7, 11 zueinander und gibt ein davon abhängiges Sensorsignal 19 aus, welches somit aufgrund der Elastizität des Torsionselementes 10 auch vom Lenkmoment 13 abhängig ist. Das Sensorsignal 19 ist damit unmittelbar vom zu erfassenden Lenkmoment 13 abhängig, so dass der Hilfsmotor 15 diese Information unmittelbar zum Drehen der zweiten Lenkwelle 11 weiterverarbeiten kann.

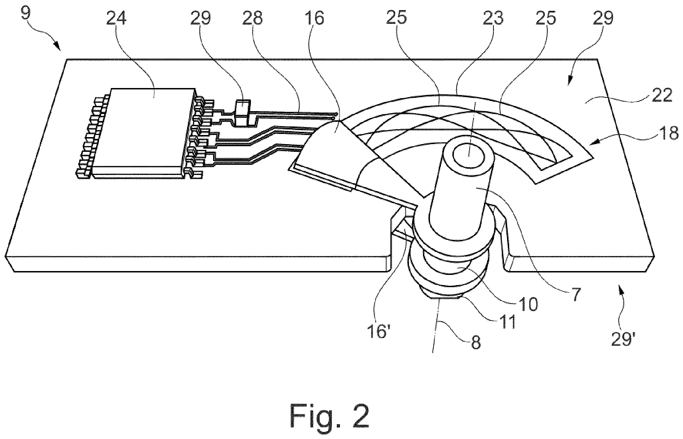

Die grundsätzliche Funktion des induktiven Sensors 9 ist in der EP 3 865 824 A1 dargestellt. Der Aufbau des induktiven Sensors 9, der der Erläuterung des vorliegenden Ausführungsbeispiels zugrunde liegt, wird nachstehend anhand der Fig. 2 im Einzelnen beschrieben.

Der induktive Sensor umfasst eine Leiterplatte 22, auf der eine Erregerspule 23, eine integrierte Schaltung 24 mit der Auswerteeinrichtung 21 und mit einer nicht weiter zu sehenden Oszillatorschaltung und die Messschaltung 18 mit mehreren Empfangsspulen 25 in Form von Flachspulen getragen sind.

Jede der Empfangsspulen 25 bildet eine sich periodisch wiederholende Schleifenstruktur aus. In der vorliegenden Ausführung weisen die Schleifenstrukturen einen sinus- beziehungsweise cosinusförmigen Verlauf auf, sind kreissegmentförmig um die Rotationsachse 8 gelegt und zueinander um 180° verschoben. Die Schleifenstruktur jeder Empfangsspule 25 bildet für sich eine Empfangsgeometrie, die in der zuvor genannten EP 3 865 824 A1 im Einzelnen beschrieben ist.

Das Koppelelement 16 ist axial über der Messchaltung 18 um die Rotationsachse 8 drehbar angeordnet und deckt in Umfangsrichtung einen Teil der Empfangsspulen 25 der Messschaltung 18 ab. Der abgedeckte Teil der Empfangsspulen 25 lässt sich durch Drehen des Koppelelementes 16 um die Rotationsachse 8 verändern.

Im einfachsten Fall ist die Leiterplatte 22 fest mit einer der beiden Lenkwellen 7, 11 verbunden und damit zwischen das Torsionselement 10 und diese Lenkwellen 7, 11 gelegt.

In diesem Fall bestromt die Oszillatorschaltung in der Auswerteschaltung 24 die Erregerspule 23 über eine Versorgungsleitung 28 mit einem periodischen Signal. In der Versorgungsleitung 28 können optional Bauelemente, wie beispielsweise ein Filterkondensator angeordnet sein.

Wie in der EP 3 865 824 A1 ausführlich beschrieben, erregt die so bestromte Erregerspule 23 in den Empfangsspulen 25 einen Strom, der in jeder Empfangsspule 25 von der Lage des beweglichen Koppelelementes 16 abhängig ist. Insoweit könnte als Messsignal 20 zur Erzeugung des Sensorsignals 19 das Signal einer einzelnen Empfangsspule 25 herangezogen werden. Zur Reduktion des Einflusses von Störfeldern allerdings wird das Messsignal 20 und damit das Sensorsignal aus einer Gegenüberstellung der Signale der beiden um 180° zueinander verschobenen Empfangsspulen 25 abgeleitet.

Da die Befestigung der Leiterplatte 22 an einer der beiden Lenkwellen 7, 11 mit einem erheblichen Montageaufwand verbunden ist, bestimmt der induktive Sensor 9 das Messsignal 20 nicht direkt. Der zuvor beschriebene Aufbau ist vielmehr auf beiden Seiten der Leiterplatte 22 angeordnet, wobei von dem weiteren Aufbau in der Fig. 2 nur das Koppelelement zu sehen ist. Die Elemente des zur Erfassung der relativen Winkelposition notwendigen weiteren Aufbaus werden in der nachstehenden Beschreibung konsequent mit einem Apostroph versehen, um beide Aufbauten voneinander trennen zu können. Das in Fig. 2 sichtbare weitere Koppelelement ist daher mit den Bezugszeichen 16' versehen.

Sind beide Lenkwellen 7, 11 beweglich zur Leiterplatte 22 angeordnet, wird zur Bestimmung der oben genannten relativen Winkelposition der beiden Lenkwellen 7, 11 zueinander und damit des davon abhängigen Messsignals 20 die Lage des weiteren beweglichen Koppelelementes 16' und damit die Lage der zweiten Lenkwelle 11 in der gleichen Weise mit dem Aufbau des Sensors 9 auf der Unterseite der Leiterplatte bestimmt, so dass in der Auswertevorrichtung 21 die Lage der beiden Lenkwellen 7, 11 relativ zur Leiterplatte 22 vorhanden sind. Einer Gegenüberstellung dieser beiden Lagen ergibt dann das Messsignal 20 aus dem sich dann wiederum das Sensorsignals 19 ableiten lässt.

Der Teil des induktiven Sensors 9 auf der Oberseite der Leiterplatte 22 wird für die weiteren Ausführungen mit dem Bezugszeichen 29 versehen, während gemäß der oben aufgestellten Definition der Teil des Sensors 9 auf der Unterseite der Leiterplatte 22 mit dem Bezugszeichen 29' versehen wird.

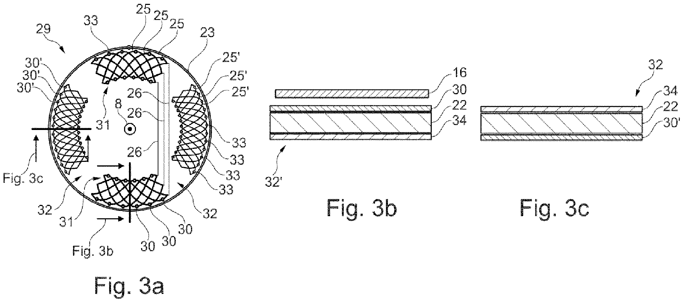

Mit Bezug auf die Figs. 3a bis 3c wird eine Weiterbildung des Sensors 9 beschrieben. Hierzu sind in den Figs. 3a bis 3c nur die Elemente dargestellt, welche die Weiterbildung betreffen. Alle anderen Elemente des Sensors 9 bleiben unverändert.

In Fig. 3a ist der Teil 29 des induktiven Sensors 9 auf der Oberseite der Leiterplatte 22 abgebildet. Eine erste Veränderung ist, dass nun nicht mehr zwei Empfangsspulen 25 um 180° verschoben sondern drei Empfangsspulen 25 um 120° verschoben zueinander angeordnet sind. Auf diese Weise lässt sich die Position des Koppelelementes 16 präziser erfassen.

Punktsymmetrisch zur Rotationssachse 8 sind weitere drei um 120° zueinander verschobene Empfangsspulen angeordnet, die der Trennung halber mit dem Bezugszeichen 30 versehen sind. Die Empfangsspulen mit dem Bezugszeichen 25 werden nachstehend als erste Empfangsspulen 25 bezeichnet, während die Empfangsspulen mit dem Bezugszeichen 30 als zweite Empfangsspulen 30 bezeichnet werden. Zusammen bilden die ersten und zweiten Empfangsspulen 25, 30 eine Empfangsspulengruppe 31, die im oben erwähnten einfachsten Fall, wenn zur Erfassung nur eine einzige Empfangsspule 25, 30 verwendet wird, ein Empfangsspulenpaar ist. Ist die Empfangsspulengruppe 31 größer, bilden jeweils immer eine erste Empfangsspule 25 und eine zweite Empfangsspule 30 ein Empfangsspulenpaar.

In den Empfangsspulenpaaren stehen die jeweilige erste Empfangsspule 25 und die jeweilige zweite Empfangsspule 30 über eine Verbindungsleitung 26 miteinander elektrisch in Kontakt. Das heißt, dass die jeweilige erste Empfangsspule 25 und die jeweilige zweite Empfangsspule 30 in jedem Empfangsspulenpaar parallel verschaltet sind. Diese elektrische Verbindungsleitung 26 ist für jedes Empfangsspulenpaar in Fig. 3a mit einer direkten Verbindung gezeichnet. Dies ist allerdings nur schematisch zu verstehen, weil sich an der eingezeichneten Stelle die Lenkwellen 7, 11 und das Torsionselement 10 befinden.

Die Verbindungsleitungen 31 verlaufen durch einen Zwischenraum 32, der zwischen den Empfangsspulenpaaren vorhanden ist. Dieser Zwischenraum 32 kann allerdings auch anderweitig genutzt werden, was in Fig. 3a durch eine gestrichelt gezeichnete weitere Empfangsspulengruppe 31' angedeutet ist. Diese weitere Empfangsspulengruppe 31 kann als zur Realisierung des Aufbaus 29' auf der Unterseite der Leiterplatte 22 verwendet werden, worauf an späterer Stelle näher eingegangen wird.

In der Empfangsspulengruppe 31 müssen die einzelnen Empfangsspulen 25, 30 zwingend voneinander elektrisch getrennt sein. Aus diesem Grund werden die Empfangsspulen 25, 30 auf mehreren Ebenen der Leiterplatte 22 geführt und müssen dazu zwischen den einzelnen Ebenen mit Durchkontaktierungen 33 hin- und hergeführt werden. Diese Durchkontaktierungen 33 sind in Fig. 3a in Form kleiner Punkte dargestellt und der Übersichtlichkeit halber nicht alle mit einem Bezugszeichen versehen. Grundsätzlich können die Durchkontaktierungen 33 beliebig gewählt werden, wie beispielsweise in der EP 3 865 824 A1. In der vorliegenden Ausführung finden sich die Durchkontaktierungen allerdings an den Extrema der sinus- und kosinusförmigen Schleifenstrukturen der Empfangsspulen 25, 30. Auf diese Weise lassen sich die Empfangsspulen 25, 30 wie analog zu einem Rundkabel in der Ebene verdrillen, was die notwendigen Durchkontaktierungen 33 auf ein Minimum reduziert.

In Fig. 3a ist im zuvor erwähnten Zwischenraum 32, der in Umfangsrichtung der Rotationsachse 8 auf beiden Seiten der Empfangsspulen 25, 30 vorhanden ist, die zuvor genannte weitere Empfangsspulengruppe 31' angeordnet. Diese weitere Empfangsspulengruppe 31' ist auf der Leiterplatte 22 allerdings auf einer Seite angeordnet, die der Empfangsspulengruppe 31 gegenüberliegt.

Die weitere Empfangsspulengruppe 31' weist die selben Merkmale auf wie die zuvor erläuterte Empfangsspulengruppe 31, sie besitzt also drei zueinander um 120° verschobene erste Empfangsspulen 25' und drei zueinander um 120° verschobene zweite Empfangsspulen 30', die jeweils punktsymmetrisch zur Rotationsachse 8 angeordnet sind. Auch sind die Empfangsspulen 25', 30' der weiteren Empfangsspulengruppe 31' in miteinander elektrisch verbundene Empfangsspulenpaare aufgeteilt. Deren elektrische Verbindungen sind in Fig. 3a allerdings der Übersichtlichkeit halber nicht zu sehen.

### Der einzige Unterschied zwischen den beiden

Empfangsspulengruppen 31, 31' ist eine Periodizität der Schleifenstrukturen der jeweiligen Empfangsspulen 25, 30, 25', 30'. Da die Empfangsspulen 25, 30, 25', 30' durch eine Oszillatorschaltung angesteuert werden, lässt sich so über unterschiedliche Resonanzfrequenzen ein unbeabsichtiger Crosstalk zwischen den resultierenden Empfangsspulengruppen 31, 31' vermeiden.

Um einen unbeabsichtigten Crosstalk zwischen den resultierenden Empfangsspulengruppen 31, 31' noch besser zu vermeiden, können in den oben erwähnten Zwischenräumen 32, die prinzipbedingt auf beiden Seiten der Leiterplatte 22 ausgebildet sind, Abschirmelemente 34 angeordnet werden. Dies ist in den Fig. 3b und 3c verdeutlicht, die Schnittansichten darstellen, deren Blickrichtung in Fig. 3a angezeigt ist.

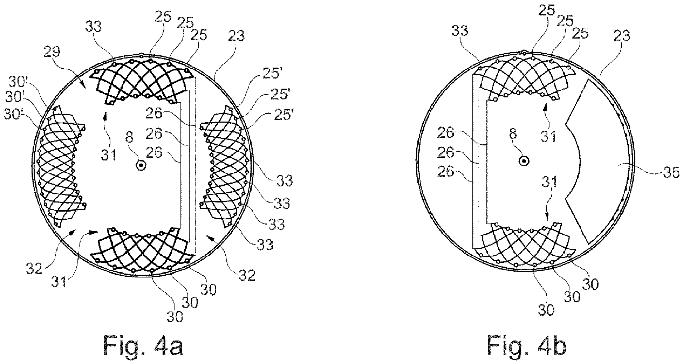

Alternative Nutzungen der Zwischenräume 32 sind in den Fig. 4a und 4b gezeigt.

In Fig. 4a sind die Zwischenräume 32 mit der oben erwähnten weiteren Empfangsspulengruppe 31' belegt, was durch eine Zeichnung der

Empfangsspulen 25', 30' in durchgezogenen Linien angedeutet ist. Auf diese Weise wird Redundanz in den induktiven Sensor 9 eingeführt, mit der sich das Messsignal 20 plausibilisieren lässt.

Alternativ oder zusätzlich kann in den Zwischenräumen 34 auch eine elektrische Schaltung 35 untergebracht sein, die so an anderer Stelle keinen Bauraum mehr in Anspruch nehmen muss.

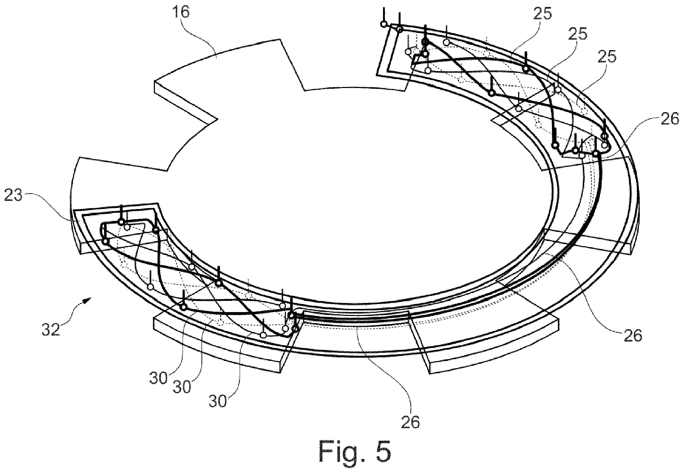

Abschließend ist die Struktur der Empfangsspulengruppe 31 in Fig. 5 noch einmal in einer perspektivischen Ansicht dargestellt.

## Patentansprüche

1. Induktiver Sensor (9) zur Erfassung einer Position, umfassend:
- eine Oszillatorschaltung, die ein periodisches Wechselspannungssignal erzeugt und in eine Erregerspule (23) einkoppelt,
- ein Empfangsspulenpaar (31) mit einer ersten Empfangsspule (25) und einer zweiten Empfangsspule (30), die jeweils eine sich periodisch wiederholende Schleifenstruktur ausbilden und deren Anordnung insgesamt eine Empfangsgeometrie ausbildet, wobei die Erregerspule (23) eingerichtet ist, basierend auf dem eingekoppelten Wechselspannungssignal in jeder Empfangsspule (25, 30) ein Signal zu induzieren,
- eine Auswerteschaltung (21) zur Ausgabe eines von der zu erfassenden Position abhängigen Sensorsignals (19) basierend auf den in den Empfangsspulen (25, 30) induzierten Signalen und
- ein bewegliches Koppelelement (16), welches die Stärke der induktiven Kopplungen zwischen der Erregerspule (23) und den Empfangsspulen (25, 30) in Abhängigkeit der zu erfassenden Position beeinflusst,
**dadurch gekennzeichnet, dass**
- die Empfangsspulen (25, 30) des Empfangsspulenpaar (31) voneinander mit einem Zwischenraum (32) geometrisch beabstandet angeordnet und miteinander elektrisch verbunden (26) sind.

2. Induktiver Sensor (9) nach Anspruch 1, wobei die Schleifenstrukturen der Empfangsspulen (25, 30) bezüglich eines Symmetriezentrums (8) zueinander symmetrisch ausgebildet sind.

3. Induktiver Sensor (9) nach Anspruch 2, wobei die zu erfassende Position eine Winkelposition um eine Rotationsachse (8) und das Symmetriezentrum die Rotationsachse (8) ist, zu der die Schleifenstrukturen punktsymmetrisch ausgebildet sind.

4. Induktiver Sensor (9) nach einem der vorstehenden Ansprüche, umfassend:
- ein weiteres Empfangsspulenpaar (25', 30') mit einer ersten Empfangsspule (25') und einer zweiten Empfangsspule (25'), die jeweils eine sich periodisch wiederholende Schleifenstruktur ausbilden und deren Anordnung insgesamt eine Empfangsgeometrie ausbildet, wobei die Erregerspule (23) oder eine weitere Erregerspule eingerichtet ist, basierend auf dem eingekoppelten Wechselspannungssignal in jeder Empfangsspule (25', 30') des weiteren Empfangsspulenpaars (31') ein Signal zu induzieren.

5. Induktiver Sensor (9) nach Anspruch 4, wobei das bewegliche Koppelelement (16) die Stärke der induktiven Kopplungen zwischen der Erregerspule (23) oder der weiteren Erregerspule und den Empfangsspulen (25', 30') des weiteren Empfangsspulenpaars (31') in Abhängigkeit der zu erfassenden Position beeinflusst, und die Auswerteschaltung zur Ausgabe des von der Position abhängigen Sensorsignals (19) basierend auf einer Gegenüberstellung der in den Empfangsspulen (25, 30) des Empfangsspulenpaars (31) und der in den Empfangsspulen (25', 30') des weiteren Empfangsspulenpaars (31') induzierten Signalen eingerichtet ist.

6. Induktiver Sensor (9) nach Anspruch 4 oder 5, umfassend ein weiteres bewegliches Koppelelement (16'), das die Stärke der induktiven Kopplungen zwischen der Erregerspule (23) oder der weiteren Erregerspule und den Empfangsspulen (25', 30') des weiteren Empfangsspulenpaars (31') in Abhängigkeit der zu erfassenden Position beeinflusst, wobei die Auswerteschaltung (21) zur Ausgabe des von der Position abhängigen Sensorsignals (19) basierend auf den in den Empfangsspulen (25, 30) des Empfangsspulenpaars (31) und den in den Empfangsspulen (25', 30') des weiteren Empfangsspulenpaars (31') induzierten Signalen eingerichtet ist.

7. Induktiver Sensor (9) nach einem der Ansprüche 4 bis 6, wobei die erste Empfangsspule (25') des weiteren Empfangsspulenpaars (31') in einer Änderungsrichtung der zu erfassenden Position gesehen im Zwischenraum (31) zwischen den Empfangsspulen (25, 30) des Empfangsspulenpaars (32) angeordnet ist.

8. Induktiver Sensor (9) nach einem der Ansprüche 4 bis 7, wobei die Empfangsspulenpaare (31, 31') auf verschiedenen Seiten einer Leiterplatte (22) getragen sind.

9. Induktiver Sensor (9) nach einem der vorstehenden Ansprüche, umfassend ein im Zwischenraum (32) angeordnetes elektronisches Bauelement (34, 35).

10. Induktiver Sensor (9) nach Anspruch 9, wobei das elektronische Bauelement (34, 35) ein elektromagnetisches Abschirmelement (35) ist.
